# EUROPÄISCHE PATENTSCHRIFT

(11) **EP 2 432 335 B1**
(45) Veröffentlichungstag und Bekanntmachung des Hinweises auf die Patenterteilung: **20.02.2013**
(21) Anmeldenummer: 10710153.7
(22) Anmeldetag: 05.03.2010
(51) Int. Cl.: A23L 3/3418, B65B 25/00, B65B 31/04

(54) **VERFAHREN ZUR AROMABEHANDLUNG EINES IN EINER VERPACKUNG VORGESEHENEN LEBENSMITTELS**
METHOD FOR FLAVOR-TREATING FOODSTUFFS PROVIDED IN A PACKAGING
PROCEDE DESTINE AU TRAITEMENT AROMATIQUE D'UN PRODUIT ALIMENTAIRE PLACE DANS UN EMBALLAGE

(30) Priorität: 20.05.2009 AT 7912009
(43) Veröffentlichungstag der Anmeldung: 28.03.2012
(73) Patentinhaber: Mittermayr, Alexander, 4060 Leonding (AT)
(72) Erfinder: Mittermayr, Alexander, 4060 Leonding (AT)
(74) Vertreter: Hübscher, Helmut
(86) Internationale Anmeldenummer: PCT/AT2010/000066
(87) Internationale Veröffentlichungsnummer: WO 2010/132902

(56) Entgegenhaltungen:
- EP-A1- 0 881 163
- WO-A2-2007/002768
- DE-T2- 69 616 765
- US-A- 4 885 897
- US-A1- 2007 275 134

## Beschreibung

### Technisches Gebiet

Die Erfindung betrifft ein Verfahren zur Aromabehandlung eines in einer Verpackung vorgesehenen Lebensmittels bei dem in den Kopfraum der offenen Verpackung ein Schutzgas, insbesondere Kohlendioxid, Stickstoff, Inertgas oder Mischungen davon, zusammen mit einer Flüssigkeit, die wenigstens einen Aromastoff aufweist, eingebracht wird, bevor die Verpackung gasdicht verschlossen wird.

### Stand der Technik

Um ein Duftaroma beim Öffnen einer Lebensmittelverpackung vorbestimmen zu können, ist es aus dem Stand der Technik bekannt (DE69500032T2, DE69616765T2) in den Kopfraum der Verpackung ein lebensmittelverträgliches Schutzgas samt einem Aromastoff einzubringen, wobei der Aromastoff in einer organischen Flüssigkeit gelöst ist. Als Schutzgas kann beispielsweise Inertgas, Kohlendioxid und/oder Stickstoff dienen, wobei diese als Gas oder Gasgernisch mitsamt die Aufgabe haben, den Sauerstoff der Atmosphäre im Kopfraum der Verpackung zu verdrängen. Damit soll nun einerseits durch das Schutzgas die Haltbarkeit des Lebensmittels bzw. sein Duftaroma verbessert sowie andererseits auch durch den zusätzlichen Aromastoff das natürliche Duftaroma des Lebensmittels unterstützt werden. Nachteilig bei zunehmender Verpackungsdauer hat sich jedoch herausgestellt, dass trotz Schutzgas und Aromastoff eine Verfälschung des Aromas nicht verhindert werden kann, so dass ein beim Öffnen vorbestimmtes bzw. ein sich in engen Grenzen haltendes Geruchsaroma nicht geschaffen werden kann. Eine verbesserte Evakuierung der Verpackung vor dem Eintragen des Schutzgases und/oder ein verbessertes Gasspülen der Verpackung mit Schutzgas konnten solch eine Verfälschung vermindern, was jedoch einen erheblichen Verfahrens- und Kostenaufwand bedeutet. Dokument DE 69616765 T2 offenbart daher ein Verfahren entsprechend dem Oberbegriff des Anspruchs 1 und eine Vorrichtung entsprechend dem Oberbegriff des Anspruchs 9. Außerdem ist es aus der WO2007/002768A2 bekannt, Lebensmittel mit einer Flüssigkeit, aufweisend Wasser, Aromastoff und Antioxidationsmittel, zu behandeln und dann in eine Verpackung einzubringen. Diese Verpackung kann nachher auch mit einer modifizierten Atmosphäre, beispielsweise mit Hilfe von Schutzgas, versehen werden. Nachteilig dabei ist, dass solch ein Verfahren aufwendig ist und außerdem eine gleichmäßige Aromabehandlung des Kopfraums der Verpackung nicht gewährleisten kann. Veränderungen im Duftaroma kann die WO2007/002768A2 daher nicht ausschließen.

### Darstellung der Erfindung

Die Erfindung hat sich daher die Aufgabe gestellt, ausgehend vom eingangs geschilderten Stand der Technik ein Verfahren zur Aromabehandlung einer Lebensmittelverpackung derart zu verbessern, dass trotz langer Lagerzeiten eine Veränderung im Duftaroma nicht in Kauf genommen werden muss bzw. das Aroma beim Öffnen in engen Grenzen gehalten werden kann. Außerdem soll das Verfahren einfach und kostengünstig sein.

Die Erfindung löst die gestellte Aufgabe hinsichtlich des Verfahrens dadurch, dass der insbesondere einen Hauptbestandteil an Wasser aufweisenden Flüssigkeit mit dem Aromastoff ein Antioxidationsmittel zugesetzt wird.

Wird der Flüssigkeit mit dem Aromastoff ein lebensmittelverträgliches Antioxidationsmittel zugesetzt und weist die Flüssigkeit als Hauptbestandteil Wasser auf, so kann überraschend festgestellt werden, dass damit das Geruchsaroma des verpackten Lebensmittels in vergleichsweise engen Grenzen gehalten werden kann. Das mit dem Wasser gemischte oder darin gelöste Antioxidationsmittel kann nämlich zusammen mit dem Schutzgas besonders vorteilhaft im Kopfraum über dem Lebensmittel verteilt werden, so dass mit einer gleichmäßigen Abgabe an Duftaroma über das Volumen des Kopfraums gerechnet werden kann. Insbesondere aber kann durch das Antioxidationsmittel auch der im Wasser gemischte oder darin gelöste Aromastoff vor einer Verfälschung durch eine eventuelle Oxidation des Lebensmittels geschützt werden, wenn der Aromastoff beispielsweise beim Eintragen über die Flüssigkeit auf das Lebensmittel gelangt. Es kann sich daher ein verbessertes und stabileres Geruchsaroma beim Öffnen der Verpackung ergeben, als dies vom Stand der Technik bekannt ist, auch wenn vergleichsweise lange Lagerzeiten bestehen, wodurch sich die Erfindung besonders auszeichnen kann. Hinzu kommt, dass selbst verfahrensbedingte Abweichungen beim Evakuierung und/oder Gasspülen sowie beim Grad der Befüllung von Schutzgas verminderte Auswirkungen auf das Geruchsaroma beim Öffnen der Verpackung haben, was zu einem geringeren Verfahrensaufwand und damit zu einem kostengünstigen Verfahren führen kann. Außerdem hat sich der Hauptbestandteil an Wasser besonders vorteilhaft hinsichtlich vereinfachter Verfahrensbedingungen bei der Aromabehandlung herausgestellt, weil damit in den Kopfraum die Flüssigkeit ohne Rücksicht auf die Lage des Lebensmittels eingetragen werden kann. Es muss nämlich durch die Zusammensetzung der Flüssigkeit keine Veränderungen in der Zusammensetzung des Lebensmittels befürchtet werden. Im Gegensatz zum Stand der Technik muss daher auch bei einer vergleichsweise erhöhten Lagerung nicht mit einer Verfälschung des Aromas und damit bei einem Öffnen mit negativen Effekten auf das Kaufverhalten der Konsumenten gerechnet werden. Als lebensmittelverträgliches Schutzgas kann sich insbesondere Inertgas, Kohlendioxid oder Stickstoff zur Verlängerung der Haltbarkeit sowie zur Konservierung des Aromas von Lebensmitteln herausstellen, wobei Inertgas beispielsweise ein Edelgas oder Stickstoff bzw. eine Mischung davon sein kann. Als einen Aromastoff als Lebensmittelzusatz kann gemäß dem Verzeichnis der Europäischen Kommission gewählt werden. Außerdem kann für das Schutzgas zum bzw. anstatt dem Inertgas noch ein Gas mit einer Mischung von 20%CO₂ und 80%N₂ verwendet werden, um so im Allgemeinen die Lebensmittelverpackung mit einer modifizierten Atmosphäre verpacken zu können. Es kann sich daher herausstellen, dass durch das gemeinsame Einbringen von einerseits Flüssigkeit mit einer Zusammensetzung aufweisend Wasser, Aroma und Antioxidationsmittel und andererseits Schutzgas besonders einfache und kostengünstige Verfahrensbedingungen geschaffen werden können, mit denen höchsten Bedingungen zur Aromabehandlung eines Kopfraums einer Verpackung genüge getan werden können. Es versteht sich von selbst, dass Lebensmittel auch als Nahrungsmittel betrachtet werden können.

Besondere Verhältnisse hinsichtlich Frische und Aromakonsistenz können sich ergeben, wenn die Flüssigkeit als Aromastoff ein Aromaextrakt aufweist. Aromaextrakte können nämlich als konzentrierte oder nicht konzentrierte Erzeugnisse besonders ein natürliches Duftaroma beim Öffnen der Lebensmittelverpackung sorgen, was unter anderem eine Akzeptanz derartiger Verpackungen bei den Konsumenten erhöhen kann. Außerdem kann die Verwendung eines Aromaextrakts auch ein Verfahren schaffen, dass ein Duftaroma auch bei längeren Lagerzeiten in engen und vordefinierten Grenzen halten kann.

Einfache Verfahrensverhältnisse ergeben sich, wenn die Flüssigkeit mit Hilfe von Unterdruck dem Schutzgas zugegeben wird. Außerdem können sich dadurch vorteilhafte Verteilungsverhältnisse der Flüssigkeit im Schutzgas ergeben, was beispielsweise durch eine unterdruckbedingte Verwirbelung der Flüssigkeit entstehen kann.

Wird das Schutzgas zusammen mit der lebensmittelverträglichen Flüssigkeit in den Kopfraum der Verpackung gesprüht, dann kann sich eine verbesserte Verteilung der Flüssigkeit im Kopfraum für eine vergleichmäßigte Aromaabgabe ergeben.

Besondere Mischverhältnisse zur Aromabehandlung haben sich herausgestellt, wenn die Mengen an Aromastoff von 0,1 bis 3 Gew.-% und an Antioxidationsmittel von 0,1 bis 10 Gew.-% auf Basis des Gewichts der Flüssigkeit liegen. Die restlichen Gewichtsprozente können in Wasser ausgebildet sein.

Wird die Flüssigkeit zu einem Aerosol zerstäubt, bevor dieses zusammen mit dem Schutzgas in die Verpackung eingebracht wird, dann kann ermöglicht werden, dass eine besondere gleichmäßige Verteilung des Aerosols im Kopfraum der Verpackung erreicht werden kann. Dies kann unter anderem zu verbesserte Lagerzeiten, ein verbessertes gleichmäßigeres Duftaroma und/oder einer verbesserten Farberhaltung am Lebensmittel führen.

Einfache Verfahrensbedingungen können ermöglicht werden, wenn die Flüssigkeit in Schutzgas zu einem Aerosol zerstäubt wird. Dieses Aerosol kann dann unter anderem auf einfache Weise dem einzutragenden Schutzgas beigemischt oder in anderer Art hinzugegeben werden, um diese dann in den Kopfraum der Verpackung gemeinsam eintragen zu können.

Es hat sich sohin für eine Aromabehandlung eine Verwendung einer Mischung aus einer lebensmittelverträglichen Flüssigkeit, die Wasser, wenigstens einen Aromastoff und ein Antioxidationsmittel aufweist, mit einem Schutzgas, insbesondere Kohlendioxid, Stickstoff oder Inertgas sowie Mischungen davon, als besonders vorteilhaft herausgestellt, wenn diese Mischung in den Kopfraum einer Lebensmittelverpackung eingesprüht wird.

Es ist weiter die Aufgabe der Erfindung eine Vorrichtung zur Durchführung des erfindungsgemäßen Verfahrens zu schaffen, die vergleichsweise kostengünstig und konstruktiv einfach ein Eintragen von Mitteln zur Aromabehandlung eines in einer Verpackung vorgesehenen Lebensmittels ermöglichen.

Die Erfindung löst die gestellte Aufgabe hinsichtlich der Vorrichtung dadurch, dass der Flüssigkeitsspeicher eine Flüssigkeit, enthaltend Wasser, wenigstens einen Aromastoff und mindestes ein Antioxidationsmittel, aufweist, wobei die in den Kopfraum der Verpackung mündende Gasleitung sowohl mit dem Gasspeicher als auch mit dem Flüssigkeitsspeicher zum gemeinsamen Einbringen der Flüssigkeit und des Schutzgases in den Kopfraum der Verpackung verbunden ist.

Vereinfachte konstruktive Voraussetzungen können geschaffen werden, wenn der Flüssigkeitsspeicher eine Flüssigkeit, enthaltend Wasser, wenigstens einen Aromastoff und mindestes ein Antioxidationsmittel, aufweist, weil dann konstruktiv von einem Speicher ausgehend Maßnahmen zur Behandlung der zu verpackenden Lebensmitteln gesetzt werden können. Daher ist es auch möglich, die in den Kopfraum der Verpackung mündende Gasleitung der Einbringmittel auf konstruktiv einfache Weise sowohl mit dem Gasspeicher als auch mit dem Flüssigkeitsspeicher zum gemeinsamen Einbringen der Flüssigkeit und Schutzgas in den Kopfraum der Verpackung zu verbinden, so dass ein einfache Vorrichtung zur Aromabehandlung einer Verpackung geschaffen werden kann. Außerdem kann mit einem gemeinsamen Einbringen von Flüssigkeit und Schutzgas für ein gleichmäßig verteiltes Aerosol im Kopfraum der Verpackung gesorgt werden.

Ist der Flüssigkeitsspeicher mit der Gasleitung über einen Aerosolbehälter verbunden, in dem die Flüssigkeit des Flüssigkeitsspeichers zerstäubt wird, dann kann auf konstruktiv einfacher Weise die Verteilung des Aerosols über dem Lebensmittel zusätzlich verbessert werden. Das vergleichsweise gleichmäßige Aerosol des Aerosolbehälters kann nämlich dem Schutzgas auf einfache Weise zugegeben werden, was aufwendige Konstruktionen von Einbringmitteln zum Zerstäuben des Aerosols vermeiden kann.

Einfache Konstruktionsverhältnisse können weiter geschaffen werden, wenn der Aerosolbehälter Schutzgas des Gasspeichers aufweist. Außerdem können damit auf einfache Weise Verunreinigungen des Einbringungsmittels vermieden werden.

### Kurze Beschreibung der Zeichnung

In den Figuren ist der Erfindungsgegenstand anhand mehrerer beispielsweise dargestellte Ausführungsbeispiel dargestellt. Es zeigen
Fig. 1 eine erste Ausführungsform und
Fig. 2 eine zweite Ausführungsform.

### Weg zur Ausführung der Erfindung

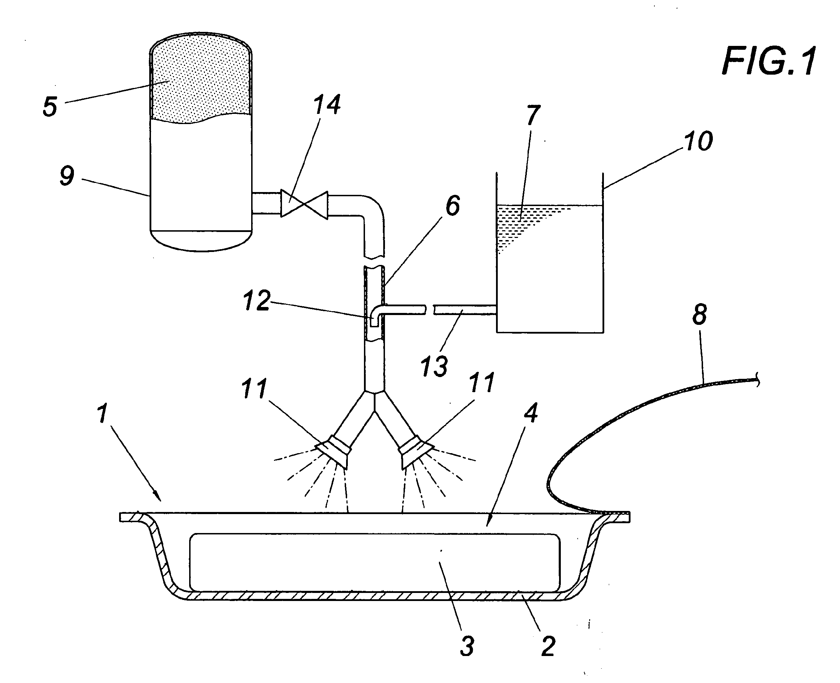

Die beispielsweise nach Fig. 1 als erste Ausführungsform dargestellte Vorrichtung weist eine Verpackung 1 mit einer Schale 2 aus Kunststoff auf, welche Schale 2 ein zu verpackendes Lebensmittel und/oder Nahrungsmittel 3 aufnimmt. In die offene Verpackung 1 wird in deren Kopfraum 4 ein Schutzgas 5 eingebracht. Zu diesem Zweck ist eine Gasleitung 6 vorgesehen. Zusammen mit dem Schutzgas 5 wird eine lebensmittelverträgliche Flüssigkeit 7 in den Kopfraum 4 eingebracht, wobei die Flüssigkeit 7 einen lebensmittelverträglichen Aromastoff aufweist. Nach dem Einbringen der Flüssigkeit 7 und des Schutzgases 5 wird die Verpackung 1 mit einer Folie 8 gasdicht verschlossen. Beispielsweise ist das Schutzgas 5 in einem Gasspeicher 9 vorgesehen, wobei die Flüssigkeit 7 in einem Flüssigkeitsspeicher 10 gelagert sein kann. Flüssigkeit 7 und Schutzgas 5 werden gemeinsam über die Gasleitung 6 zur Verpackung 1 geführt. Das erfindungsgemäße Verfahren zeichnet sich insbesondere dadurch aus, dass der einen Hauptbestandteil an Wasser aufweisenden Flüssigkeit 7 mit dem Aromastoff ein lebensmittelverträgliches Antioxidationsmittel zugesetzt wird. Durch das Antioxidationsmittel kann nämlich eine verbesserte und stabilere Aromaabgabe des Aromastoffs beim Öffnen der Verpackung 1 mit Hilfe eines Abziehens der Folie 8 erreicht werden, wenn das Antioxidationsmittel als ein Teil der Flüssigkeit 7, aufweisend weiter Armoma und Wasser, zusammen mit dem Schutzgas 5 eingetragen wird.

Zur verbesserten Verteilung des eine Flüssigkeit 7 aufweisenden Schutzgases 5 werden diese Mittel 5 und 7 über zwei Düsen 11 in den Kopfraum 4 der Verpackung 1 eingebracht. Anhand der Düsen kann die Flüssigkeit 7 vorteilhaft zumindest teilweise in ein Aerosol übergeführt werden, was für eine besondere Verteilung der Flüssigkeit mitsamt dem Schutzgas 5 im Kopfraum 4 der Verpackung 1 führt und damit eine verbesserte Haltbarkeit des Duftaromas ermöglicht. Diese Aerosolbildung kann jedoch bereits teilweise in der Gasleitung 6 eintreten bzw. dort durchgeführt werden, der das Schutzgas 5 führenden Gasleitung 6 die Flüssigkeit 7 zugeführt wird.

Außerdem hat sich ein Hinzufügen der Flüssigkeit 7 mit Hilfe eines in die Gasleitung 6 ragenden Unterdruckknies 12 der Flüssigkeitsleitung 13 vorteilhaft hinsichtlich der Verteilung der Flüssigkeit 7 im Schutzgas 5 herausgestellt. Über das Ventil 14 kann die Menge an zugeführtem Schutzgas 5 und damit auch die zugeführte Menge an Flüssigkeit 7 eingestellt werden.

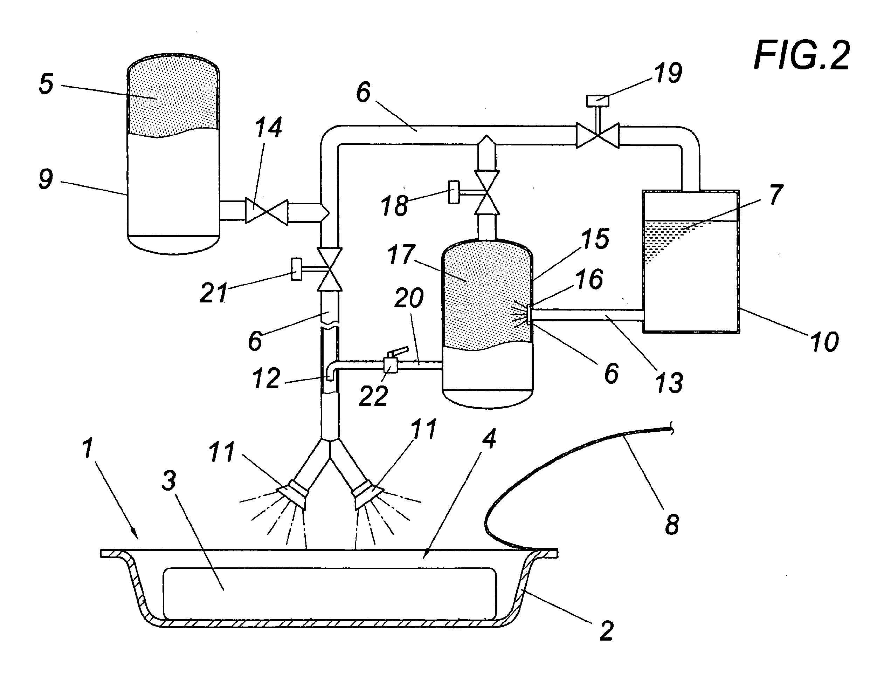

Nach dem nach Fig. 2 dargestellten zweiten Ausführungsbeispiel wird zum Unterschied zu dem nach Fig. 1 dargestellten ersten Ausführungsbeispiel eine Veränderung in der Zerstäubung der Flüssigkeit 7 gezeigt. Hier wird die Flüssigkeit 7 des Flüssigkeitsbehälters 10 über eine Flüssigkeitsleitung 13 zu einer in einem Aerosolbehälter 15 ragende Zerstäuberdüse 16 geführt. Da der Flüssigkeitsbehälter 10 unter Druck steht, weil dieser beispielsweise an die unter Druck stehende Gasleitung 6 angeschlossen ist, wird die in den Aerosolbehälter 15 gedrückte Flüssigkeit 7 zerstäubt. Im Aerosolbehälter 15 kann also ein Aerosol 17 geschaffen werden, das zu einer besonderen Gleichmäßigkeit in der Verteilung der Schwebeteilchen im Gas auszeichnen kann. Des Weiteren sind auch auf einfache Weise erhöhte Konzentrationen der zerstäubten Flüssigkeit 7 im Gas des Aerosolbehälters 15 möglich. Einfacher Weise ist der Aerosolbehälter 15 auch mit Schutzgas 5 des Gasbehälters 9 gefüllt, in dem die Gasleitung 6 mit dem Aerosolbehälter 16 über ein Einstellventil 18 verbunden ist. Um unterschiedliche Druckverhältnisse zwischen Flüssigkeitsbehälter 10 und Aerosolbehälter 15 einstellen zu können, ist der Flüssigkeitsbehälter 10 über ein Einstellventil 19 mit der Gasleitung 6 verbunden.

Das Aerosol 17 des Aerosolbehälters 10 wird dann über eine Verbindungsleitung 20 der das Schutzgas 5 führenden Gasleitung 6 zugeführt, so dass dieses Aerosol 17 gemeinsam mit dem Schutzgas 5 in den Kopfraum 4 der Verpackung 1 eingetragen werden kann. Das Aerosol 17 kann sich dabei mit dem Schutzgas 5 mischten und/oder sich dieser Strömung ungemischt beifügen. Auf die Düsen 11 könne eventuell durch die bereits erfolgte Aerosolerzeugung im Aerosolbehälter 15 verzichtet werden, obwohl eine abschließende gemeinsame Düse einer gleichmäßigeren Verteilung im Kopfraum 4 der Verpackung 1 durchaus dienlich sein kann.

In der Gasleitung 6 ist außerdem ein weiteres Einstellventil 21 vorgesehen, um - den Druckverhältnissen im Gasbehälter 9 entsprechend - das Zusammenfügen von Schutzgas 5 und Aerosol 17 regeln zu können, wobei zur Volumenregelung des Aerosols 17 in der Verbindungsleitung 20 ein Mengenventil 22 vorgesehen ist.

## Patentansprüche

1. Verfahren zur Aromabehandlung eines in einer Verpackung (1) vorgesehenen Lebensmittels (3) bei dem in den Kopfraum (4) der offenen Verpackung (1) ein Schutzgas (5), insbesondere Kohlendioxid, Stickstoff, Inertgas oder Mischungen davon, zusammen mit einer Flüssigkeit (7), die wenigstens einen Aromastoff aufweist, eingebracht wird, bevor die Verpackung (1) gasdicht verschlossen wird, **dadurch gekennzeichnet, dass** der insbesondere einen Hauptbestandteil an Wasser aufweisenden Flüssigkeit (7) mit dem Aromastoff ein Antioxidationsmittel zugesetzt wird.

2. Verfahren nach Anspruch 1, **dadurch gekennzeichnet, dass** die Flüssigkeit (7) als Aromastoff ein Aromaextrakt aufweist.

3. Verfahren nach Anspruch 1 oder 2, **dadurch gekennzeichnet, dass** die Flüssigkeit (7) mit Hilfe von Unterdruck dem Schutzgas (5) zugegeben wird.

4. Verfahren nach Anspruch 1, 2 oder 3, **dadurch gekennzeichnet, dass** das Schutzgas (5) zusammen mit der Flüssigkeit (7) in den Kopfraum (4) der Verpackung (1) gesprüht wird.

5. Verfahren nach einem der Ansprüche 1 bis 4, **dadurch gekennzeichnet, dass** die Mengen an Aromastoff von 0,1 bis 3 Gew.-% und an Antioxidationsmittel von 0,1 bis 10 Gew.-% auf Basis des Gewichts der Flüssigkeit (7) liegen.

6. Verfahren nach einem der Ansprüche 1 bis 5, **dadurch gekennzeichnet, dass** die Flüssigkeit (7) zu einem Aerosol (17) zerstäubt wird, bevor dieses zusammen mit dem Schutzgas (5) in die Verpackung (1) eingebracht wird.

7. Verfahren nach Anspruch 6, **dadurch gekennzeichnet, dass** das die Flüssigkeit (7) in Schutzgas (5) zu einem Aerosol (17) zerstäubt wird.

8. Verwendung einer Mischung aus einer Flüssigkeit (7), die Wasser, wenigstens einen Aromastoff und ein Antioxidationsmittel aufweist, und ein Schutzgas (5), insbesondere Kohlendioxid, Stickstoff, Inertgas oder Mischungen davon, zum Einsprühen in den Kopfraum (4) einer Verpackung (1) zur Aromabehandlung eines in der Verpackung (1) vorgesehenen Lebensmittels (3).

9. Vorrichtung zur Aromabehandlung eines Lebensmittels (3) mit einem in einer Verpackung (1) vorgesehenen Lebensmittel (3), mit einem Flüssigkeitsspeicher (10), der eine einen Aromastoff enthaltende Flüssigkeit (7) aufweist, mit einem Gasspeicher (9) für ein Schutzgas (5), insbesondere Kohlendioxid, Stickstoff, Inertgas oder Mischungen davon, und mit einem wenigstens eine Gasleitung (6) aufweisenden Einbringmittel zum Einbringen des Aromastoffs und des Schutzgases (5) in den Kopfraum (4) der Verpackung (1), **dadurch gekennzeichnet, dass** der Flüssigkeitsspeicher (10) eine Flüssigkeit (7), enthaltend Wasser, wenigstens einen Aromastoff und mindestes ein Antioxidationsmittel, aufweist, wobei die in den Kopfraum (4) der Verpackung (1) mündende Gasleitung (6) sowohl mit dem Gasspeicher (9) als auch mit dem Flüssigkeitsspeicher (10) zum gemeinsamen Einbringen der Flüssigkeit (7) und des Schutzgases (5) in den Kopfraum (4) der Verpackung (1) verbunden ist.

10. Vorrichtung nach Anspruch 9, **dadurch gekennzeichnet, dass** der Flüssigkeitsspeicher (10) mit der Gasleitung (6) über einen Aerosolbehälter (15) verbunden ist, in dem die Flüssigkeit (7) des Flüssigkeitsspeichers (10) zerstäubt wird.

11. Vorrichtung nach Anspruch 10, **dadurch gekennzeichnet, dass** der Aerosolbehälter (15) Schutzgas (5) des Gasspeichers (9) aufweist.

## Claims

1. Method for flavour-treating a foodstuff (3) provided in a packaging (1), wherein a protective gas (5), in particular carbon dioxide, nitrogen, inert gas or mixtures thereof, is introduced into the head space (4) of the open packaging (1) together with a liquid (7) comprising at least one flavouring agent before the packaging (1) is sealed in a gas-tight manner, **characterised in that** an antioxidant is added to the liquid (7) comprising the flavouring agent, said liquid comprising in particular water as the main constituent.

2. Method as claimed in claim 1, **characterised in that** the liquid (7) comprises a flavouring essence as the flavouring agent.

3. Method as claimed in claim 1 or 2, **characterised in that** the liquid (7) is added to the protective gas (5) with the aid of negative pressure.

4. Method as claimed in claim 1, 2 or 3, **characterised in that** the protective gas (5) is sprayed together with the liquid (7) into the head space (4) of the packaging (1).

5. Method as claimed in any one of claims 1 to 4, **characterised in that** the quantities of flavouring agent are in the range of 0.1 to 3 wt.% and the quantities of antioxidant are in the range of 0.1 to 10 wt.% on the basis of the weight of the liquid (7).

6. Method as claimed in any one of claims 1 to 5, **characterised in that** the liquid (7) is atomised to form an aerosol (17) before this is introduced together with the protective gas (5) into the packaging (1).

7. Method as claimed in claim 6, **characterised in that** the liquid (7) is atomised in protective gas (5) to form an aerosol (17).

8. Use of a mixture of a liquid (7), which comprises water, at least one flavouring agent and an antioxidant, and a protective gas (5), in particular carbon dioxide, nitrogen, inert gas or mixtures thereof, for spraying into the head space (4) of a packaging (1) for flavour-treating a foodstuff (3) provided in the packaging (1).

9. Apparatus for flavour-treating a foodstuff (3) having a foodstuff (3) provided in the packaging (1), a liquid storage container (10) which comprises a liquid (7) containing a flavouring agent, a gas storage container (9) for a protective gas (5), in particular carbon dioxide, nitrogen, inert gas or mixtures thereof, and an introduction means comprising at least one gas conduit (6) for introducing the flavouring agent and the protective gas (5) into the head space (4) of the packaging (1), **characterised in that** the liquid storage container (10) comprises a liquid (7) containing water, at least one flavouring agent and at least one antioxidant, wherein the gas conduit (6) issuing into the head space (4) of the packaging (1) is connected both to the gas storage container (9) and to the liquid storage container (10) for joint introduction of the liquid (7) and the protective gas (5) into the head space (4) of the packaging (1).

10. Apparatus as claimed in claim 9, **characterised in that** the liquid storage container (10) is connected to the gas conduit (6) via an aerosol container (15), in which the liquid (7) of the liquid storage container (10) is atomised.

11. Apparatus as claimed in claim 10, **characterised in that** the aerosol container (15) comprises protective gas (5) of the gas storage container (9).

## Revendications

1. Procédé destiné au traitement aromatique d'un produit alimentaire (3) placé dans un emballage (1), selon lequel un gaz de protection (5) en particulier du dioxyde de carbone, de l'azote, du gaz inerte ou des mélanges de ceux-ci, est introduit dans l'espace supérieur (4) de l'emballage (1) ouvert, conjointement avec un liquide (7), qui comporte au moins une substance aromatique, avant que l'emballage (1) soit fermé de manière étanche au gaz, **caractérisé en ce qu'**un agent anti-oxydant est ajouté au liquide (7), présentant notamment de l'eau comme constituant principal, avec la substance aromatique.

2. Procédé selon la revendication 1, **caractérisé en ce que** le liquide (7) présente en tant que substance aromatique une préparation aromatisante.

3. Procédé selon la revendication 1 ou 2, **caractérisé en ce que** le liquide (7) est ajouté en dépression au gaz de protection (5).

4. Procédé selon la revendication 1, 2 ou 3, **caractérisé en ce que** le gaz de protection (5) est pulvérisé conjointement avec le liquide (7) dans l'espace supérieur (4) de l'emballage (1).

5. Procédé selon l'une des revendications 1 à 4, **caractérisé en ce que** les quantités sont de 0,1 à 3 % en poids pour la substance aromatique et de 0,1 à 10 % du poids pour l'agent anti-oxydant, sur la base du poids du liquide (7).

6. Procédé selon l'une des revendications 1 à 5, **caractérisé en ce que** le liquide (7) est atomisé pour former un aérosol (17), avant que celui-ci soit introduit dans l'emballage (1) conjointement avec le gaz de protection (5).

7. Procédé selon la revendication 6, **caractérisé en ce que** le liquide (7) est atomisé pour former un aérosol (17) dans le gaz de protection (5).

8. Utilisation d'un mélange composé d'un liquide (7), qui présente de l'eau, au moins une substance aromatique et un agent anti-oxydant, et d'un gaz de protection (5), en particulier du dioxyde de carbone, de l'azote, du gaz inerte ou des mélanges de ceux-ci, pour pulvérisation dans l'espace supérieur (4) d'un emballage (1) pour le traitement aromatique d'un produit alimentaire (3) prévu dans l'emballage (1).

9. Dispositif destiné au traitement aromatique d'un produit alimentaire (3) avec un produit alimentaire (3) prévu dans un emballage (1), avec un réservoir de liquide (10) qui présente un liquide (7) contenant une substance aromatique, avec un réservoir de gaz (9) pour un gaz de protection (5), en particulier du dioxyde de carbone, de l'azote, du gaz inerte ou des mélanges de ceux-ci, et avec un moyen d'introduction présentant au moins une conduite de gaz (6) pour introduire la substance aromatique et le gaz de protection (5) dans l'espace supérieur (4) de l'emballage (1), **caractérisé en ce que** le réservoir de liquide (10) présente un liquide (7) contenant de l'eau, au moins une substance aromatique et au moins un agent anti-oxydant, la conduite de gaz (6) débouchant dans l'espace supérieur (4) de l'emballage (1) étant reliée aussi bien au réservoir de gaz (9) qu'au réservoir de liquide (10) pour une introduction conjointe du liquide (7) et du gaz de protection (5) dans l'espace supérieur (4) de l'emballage (1).

10. Dispositif selon la revendication 9, **caractérisé en ce que** le réservoir de liquide (10) est relié à la conduite de gaz (6) par le biais d'un réservoir d'aérosol (15) dans lequel le liquide (7) du réservoir de liquide (10) est atomisé.

11. Dispositif selon la revendication 10, **caractérisé en ce que** le réservoir d'aérosol (15) présente du gaz de protection (5) du réservoir de gaz (9).
